# EUROPÄISCHE PATENTSCHRIFT

(11) **EP 0 566 953 B1**
(45) Veröffentlichungstag und Bekanntmachung des Hinweises auf die Patenterteilung: **16.07.1997**
(21) Anmeldenummer: 93105954.7
(22) Anmeldetag: 13.04.1993
(51) Int. Cl.: C08G 18/80, C08G 18/08, C08G 18/70, C09D 175/04

(54) **Wässrige Einbrennfüller für elastische Einbrennlackierungen**
Aqueous primers for elastic stoving coatings
Primaires aqueux pour des revêtements au four élastiques

(30) Priorität: 24.04.1992 DE 4213527
(43) Veröffentlichungstag der Anmeldung: 27.10.1993
(73) Patentinhaber: BAYER AG, 51368 Leverkusen (DE)
(72) Erfinder: Pedain, Josef, Dr., W-5000 Köln 80 (DE); Müller, Heino, W-5090 Leverkusen (DE); Mager, Dieter, W-5090 Leverkusen (DE); Schönfelder, Manfred, Dr., W-5090 Leverkusen 3 (DE)

(56) Entgegenhaltungen:
- EP-A- 147 674
- EP-A- 0 022 452
- EP-A- 0 183 150
- EP-A- 0 443 138
- DE-A- 2 708 611

## Beschreibung

Die vorliegende Erfindung betrifft neuartige wäßrige Einbrennfüller für Einbrennlackierungen insbesondere für die Herstellung von elastischen Füllern für die Lackierung von Automobilkarosserien.

In den letzten Jahren stieg die Bedeutung wäßriger Lacke und Beschichtungsmittel aufgrund immer strengerer Emissionsrichtlinien bezüglich der bei der Lackapplikation freiwerdenden Lösemittel stark an. Obwohl inzwischen bereits für viele Anwendungsbereiche wäßrige Lacksysteme zur Verfügung stehen, können diese das hohe Qualitätsniveau konventioneller, lösemittelhaltiger Lacke hinsichtlich Lösemittel- und Chemikalienbeständigkeit oder auch Elastizität und mechanischer Belastbarkeit oftmals noch nicht erreichen. Insbesondere sind bislang noch keine aus wäßriger Phase zu verarbeitende Beschichtungsmittel auf Polyurethanbasis bekannt geworden, die den hohen Forderungen der Praxis an elastische Füller für die Lackierung von Automobilkarosserien bezüglich Schlagzähigkeit, Steinschlagbeständigkeit, sowie Wasser- und Chemikalien-Beständigkeit genügen.

Diese Feststellung gilt sowohl für die GB-PS 1 444 933, die EP-A-0 061 628 und die DE-AS 2 359 613, die sich mit der hydrophilen Modifizierung von aromatischen Polyisocyanaten befassen, als auch für die DE-OS 4 001 783, die sich mit speziellen anionisch modifizierten aliphatischen Polyisocyanaten befaßt, als auch-für die Systeme der DE-OS 2 456 469, der DE-OS 2 814 815, der EP-A-22452, 147674, 0 012 348 und der EP-A-0 424 697, die sich mit wäßrigen Einbrennlackbindemitteln auf Basis von blockierten Polyisocyanaten und organischen Polyhydroxylverbindungen befassen. Auch die Systeme auf Basis von carboxylgruppenhaltigen Polyurethan-Prepolymeren mit verkappten Isocyanatgruppen gemäß DE-OS 2 708 611 bzw. die hochfunktionellen und daher zur Herstellung von elastischen Überzügen weitgehend ungeeigneten, blockierten, wasserlöslichen Urethanprepolymerisate gemäß DE-OS 3 234 590 sind für den genannten Zweck weitgehend unbrauchbar.

Wie jetzt gefunden wurde, gelingt die Herstellung von aus wäßriger Phase zu verarbeitenden Einbrennfüllern, die den genannten Forderungen der Praxis in optimaler Weise genügen, wenn als Bindemittel ausgewählte Kombinationen der nachstehend näher beschriebenen Art aus a) in Wasser löslichen oder dispergierbaren Polyhydroxylverbindungen mit speziellen in Wasser löslichen oder dispergierbaren, blockierten Polyisocyanaten b) zum Einsatz gelangen.

Gegenstand der Erfindung sind demzufolge hitze-vernetzbare wäßrige Einbrennfüller, die als Bindemittel eine Kombination aus
a) einer in Wasser löslichen oder dispergierbaren Polyolkomponente mit
b) einer in Wasser löslichen oder dispergierbaren Polyisocyanatkomponente mit blockierten Isocyanatgruppen,
sowie gegebenenfalls die üblichen Hilfs- und Zusatzmittel der Beschichtungstechnologie enthalten,
dadurch gekennzeichnet, daß die Polyisocyanatkomponente b) eine mittlere NCO-Funktionalität, bezogen auf die reversibel blockierten Isocyanatgruppen von 2,0 bis 2,6 aufweist und das zumindest teilweise durch Neutralisation der eingebauten Carboxylgruppen in die Salzform überführte Umsetzungsprodukt aus
b1) einem Polyisocyanatgemisch einer mittleren NCO-Funktionalität von 2,5 bis 3,5 aus (i) mindestens 15 Gew.-% einer Diisocyanat-Komponente bestehend aus mindestens einem organischen Diisocyanat und (ii) einer der mittleren NCO-Funktionalität entsprechenden Menge einer höherfunktionellen Polyisocyanat-Komponente, bestehend aus mindestens einem tri- oder höherfunktionellen Polyisocyanat mit
b2) einem Blockierungsmittel für Isocyanatgruppen in einer Menge von 50 bis 80 Äquivalent-%, bezogen auf die freien Isocyanatgruppen der Komponente b1), und mit
b3) mindestens einer aliphatischen Monohydroxy-mono-carbonsäure in einer Menge von 20 bis 50 Äquivalent-%, bezogen auf die freien Isocyanatgruppen der Komponente b1) und die Hydroxylgruppen der Komponente b3)
darstellt, mit der Maßgabe, daß das Äquivalentverhältnis, bezogen auf die Blockierungsmittel b2) und die Hydroxylgruppen der Komponente b3) einerseits zu Isocyanatgruppen der Komponente b1) andererseits bei mindestens 0,9:1 liegt.

Gegenstand der Erfindung ist auch die Verwendung dieser Einbrennfüller zur Einbrennlackierung von Metallteilen, insbesondere zur Herstellung von elastischen Füllern mit hoher Steinschlagfestigkeit.

Bei der Bindemittelkomponente a) handelt es sich um in Wasser lösliche oder dispergierbare Polyhydroxylverbindungen eines aus Hydroxylgruppengehalt und Hydroxylfunktionalität berechenbaren mittleren Molekulargewichts 1000 bis 100 000, vorzugsweise 2000 bis 10 000 der an sich aus der Chemie der Polyurethanlacke bekannten Art, vorausgesetzt die Polyhydroxylverbindungen weisen einen zu ihrer Löslichkeit bzw. Dispergierbarkeit in Wasser ausreichenden Gehalt an hydrophilen Gruppierungen, insbesondere Ethylenoxideinheiten aufweisenden Polyetherketten und/oder Carboxylatgruppen auf. Grundsätzlich möglich ist allerdings auch die Verwendung von für sich allein nicht ausreichend hydrophilen Polyhydroxylverbindungen in Abmischung mit externen Emulgatoren.

Als Komponente a) in Betracht kommen Polyhydroxypolyester, Polyhydroxypolyether oder Hydroxylgruppen aufweisende Polymerisate, d.h. die an sich bekannten Polyhydroxypolyacrylate. Die Verbindungen weisen im allgemeinen eine Hydroxylzahl von 20 bis 200, vorzugsweise von 50 bis 130, bezogen auf 100 %ige Produkte, auf.

Bei den Polyhydroxylpolyacrylaten handelt es sich um an sich bekannte Mischpolymerisate von Styrol mit einfachen Estern der Acrylsäure und/oder Metharylsäure, wobei zwecks Einführung der Hydroxylgruppen Hydroxyalkylester, wie beispielsweise die 2-Hydroxyethyl-, 2-Hydroxypropyl-, 2-, 3- oder 4-Hydroxybutylester dieser Säuren mitverwendet werden.

Geeignete Polyetherpolyole sind die aus der Polyurethanchemie an sich bekannten Ethoxylierungs- und/oder Propoxylierungsprodukte geeigneter 2- bis 4-wertiger Startermoleküle wie z.B. Wasser, Ethylenglykol, Propandiol, Trimethylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete carbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie sie z.B. in Houben-Weyl, Methoden der organischen Chemie, Band XIV/2, G. Thieme-Verlag, Stuttgart, 1963, Seiten 1 bis 47 beschrieben sind.

Die gegebenenfalls erforderliche hydrophile Modifizierung dieser Polyhydroxylverbindungen erfolgt nach an sich bekannten Methoden, wie sie beispielsweise in EP-B-0 157 291 oder EP-A-0 427 028 offenbart sind. Die in diesen Vorveröffentlichungen beschriebenen, in Wasser löslichen bzw. dispergierbaren, urethanmodifizierten Polyester sind besonders gut geeignet. Die in DE-OS 3 829 587 beschriebenen, in Wasser löslichen oder dispergierbaren, Hydroxylgruppen aufweisenden Polymerisate sind erfindungsgemäß als Komponente a) ebenfalls geeignet.

Erfindungswesentlich ist vor allem die Natur der in den Überzugsmitteln vorliegenden Polyisocyanatkomponente b), die ein in Wasser lösliches oder dispergierbares, blockiertes Polyisocyanat mit einer NCO-Funktionalität, bezogen auf die blockierten Isocyanatgruppen, von 2,0 bis 2,6 aufweist. Von entscheidender erfindungsgemäßer Bedeutung ist hierbei, daß diese Polyisocyanatkomponente b) auf bestimmten Polyisocyanatgemischen b1) basiert, in denen sowohl Diisocyanate als auch tri- und/oder höherfunktionelle Polyisocyanate vorliegen, da nur so die geforderten gegensätzlichen Eigenschaften wie gute Elastizität einerseits und hohe Vernetzungsdichte, d.h. Wasser- und Chemikalienbeständigkeit andererseits gewährleistet sind.

Die zur Herstellung der Komponente b) eingesetzten Polyisocyanatgemische b1) weisen eine mittlere NCO-Funktionalität von 2,5 bis 3,5 auf und bestehen aus destens 15 Gew.-% an einer Diisocyanat-Komponente, bestehend aus mindestens einem organischen Diisocyanat und einer der genannten mittleren NCO-Funktionalität entsprechenden Menge einer Polyisocyanatkomponente, stehend aus mindestens einem tri- oder höherfunktionellen Polyisocyanat.

Als Diisocyanate kommen beispielsweise 1-Isocyanato-3,3,5-trimethyl-5-isocyanatomethyl-cyclohexan (IPDI) oder 4,4'-Diisocyanatodicyclohexylmethan in Betracht. Auch difunktionelle Derivate von Hexamethylendiisocyanat (HDI), beispielsweise das Uretdiondiisocyanat der Formel 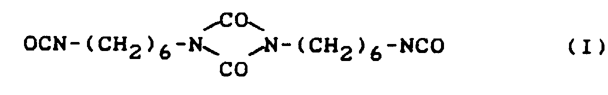 welches vorzugsweise einen Gehalt an freiem HDI von weniger als 0,5 Gew.-% aufweist, kommt als Diisocyanat-Komponente der erfindungsgemäßen Ausgangsgemische b1) in Betracht.

Das letztgenannte Uretdiondiisocyanat entsteht bei der an sich bekannten Oligomerisierung von Hexamethylendiisocyanat, wie sie beispielsweise in DE-OS 1 670 720, DE-OS 3 437 635, DE-OS 3 432 081, DE-OS 3 809 261 oder DE-OS 39 00 053 beschrieben ist. Bei dieser Oligomerisierung entstehen im allgemeinen neben dem Uretdiongruppen aufweisenden Dimerisierungsprodukt höherfunktionelle, Isocyanuratgruppen aufweisende Trimerisierungsprodukte, so daß die mittlere Funktionalität der Oligomerisierungsprodukte von 2,0 bis 2,7 reichen kann. Bei der Verwendung von derartigen Oligomerisierungsprodukten muß bei der Berechnung der mittleren NCO-Funktionalität des Gemischs b1) selbstverständlich der Anteil an bereits vorliegenden tri- und höherfunktionellen Polyisocyanaten bei der Herstellung des Gesamtgemischs (Hinzufügung von weiteren tri- und/oder funktionellen Polyisocyanaten) berücksichtigt werden.

Als tri- und höherfunktionelle Polyisocyanate kommen die üblichen, aus der Polyurethanchemie an sich bekannten, mindestens trifunktionellen Polyisocyanate mit aromatisch, vorzugsweise jedoch (cyclo)aliphatisch gebundenen Isocyanatgruppen in Betracht. Besonders gut geeignet sind die Urethan-, Allophanat-, Biuret- und insbesondere Isocyanuratgruppen aufweisenden Derivate von Hexamethylendiisocyanat mit einem Gehalt an freiem Hexamethylendiisocyanat von weniger als 0,2 Gew.-% und einer mittleren NCO-Funktionalität von 3 bis 6.

Besonders bevorzugt wird als höherfunktionelles Polyisocyanat ein Isocyanuratgruppen aufweisendes Derivat von Hexamethylendiisocyanat eingesetzt, welches einen Gehalt an freiem Hexamethylendiisocyanat von weniger als 0,2 Gew.-% und eine mittlere NCO-Funktionalität von 3,8 bis 4,2 aufweist.

Zur Herstellung der erfindungswesentlichen Polyisocyanatkomponente b) werden die aus den genannten Ausgangskomponenten hergestellten Ausgangsgemische b1), die im allgemeinen einen NCO-Gehalt von ca. 15 bis 30 Gew.-% aufweisen, mit üblichen Blockierungsmitteln in einer an sich bekannten Blockierungsreaktion zu 50 bis 80 % blockiert und zu 20 bis 50 % mit Monohydroxymonocarbonsäuren b3) zur Reaktion gebracht, wobei diese Umsetzungen in beliebiger Reihenfolge ablaufen können. Wesentlich ist lediglich (i), daß das Äquivalentverhältnis, bezogen auf die Blockierungsmittel b2) und die Hydroxylgruppen der Komponente b3) einerseits zu Isocyanatgruppen der Komponente b1) andererseits bei mindestens 0,9:1 liegt, und (ii) daß bei Verwendung eines Unterschusses an Isocyanatgruppen gegenüber der Gesamtmenge an alkoholischen Hydroxylgruppen der Monohydroxycarbonsäure b3) und der gegenüber Isocyanatgruppen reaktionsfähigen Gruppen der Blockierungsmittel b2) die Monohydroxycarbonsäure b3) vor der Gesamtmenge des Blockierungsmittels b2) zum Einsatz gelangt, so daß für jede Hydroxylgruppe der Komponente b3) mindestens eine Isocyanatgruppe der Komponente b1) zur Verfügung steht. Die Verwendung eines geringfügigen Überschusses an Isocyanatgruppen der Komponente b1) bzw. an Blockierungsmittel b2) ist im Prinzip nicht schädlich. Das genannte Äquivalentverhältnis liegt somit bei mindestens 0,9:1, vorzugsweise bei 0,95:1 bis 1,1:1.

Als Blockierungsmittel b2) werden die bekannten monofunktionellen Blockierungsmittel eingesetzt, wie z.B. ε-Caprolactam, Malonsäurediethylester, essigsäureethylester oder Oxime wie Butanonoxim. Butanonoxim ist das bevorzugte Blockierungsmittel.

Als Hydroxycarbonsäuren b3) kommen z.B. 2-Hydroxyessigsäure, 3-Hydroxypropansäure oder 12-Hydroxy-9-octadecansäure (Ricinolsäure) in Betracht. Bevorzugte Carbonsäuren sind solche, bei denen die Carboxylgruppe aufgrund sterischer Effekte in ihrer Reaktivität gehindert ist. Besonders bevorzugt wird die 3-Hydroxy-2,2-dimethylpropansäure (Hydroxypivalinsäure) verwendet.

Zur Herstellung der Polyisocyanatkomponente b) wird im allgemeinen die durch Abmischung der Einzelkomponenten hergestellte Komponente b1) nacheinander in beliebiger Reihenfolge oder gleichzeitig mit dem Blockierungsmittel b2) und der Hydroxycarbonsäure b3) umgesetzt. Bevorzugt wird zunächst ein Teil des Blockierungsmittels zur Reaktion gebracht, danach die Hydroxycarbonsäure und anschließend die Restmenge des Blockierungsmittels. Insbesondere bei dieser Variante kann hier ein geringfügiger Überschuß an Blockierungsmittel zum Einsatz gelangen. Es kann aber auch weitergearbeitet werden, wenn noch kleine Anteile an nicht-umgesetzten NCO-Gruppen im Reaktionsgemisch vorhanden sind. Die Umsetzungen erfolgen bei 0°C bis 120°C, bevorzugt bei 20 bis 60°C, wobei man besonders die Hydroxycarbonsäure b3) unter milden Bedingungen abreagieren läßt, um zu verhindern, daß auch die Carboxylgruppe mit den NCO-Gruppen zur Reaktion kommt.

Die Umsetzungen können lösemittelfrei oder in einem inerten Lösemittel durchgeführt werden, die gegebenenfalls nach der Umsetzung, Neutralisation und Aufnahme in Wasser durch Destillation entfernt werden können. Als Lösemittel kommen solche in Frage, die gegenüber NCO-Gruppen nicht reaktiv sind. Beispielhaft genannt seien Ketone wie Aceton und Methylethylketon, Ester wie Ethylacetat aber auch Lösemittel wie N-Methylpyrrolidon, die unter Umständen auch in kleinen Anteilen als Stabilisierungs- bzw. Verlaufhilfsmittel in dem Überzugsmittel verbleiben können.

Nach beendeter Umsetzung erfolgt eine zumindest teilweise Neutralisation der eingebauten Carboxylgruppen mit einem geeigneten Neutralisationsmittel. Geeignete Neutralisationsmittel sind Alkali- oder Erdalkalihydroxide, bevorzugt aber tert.-Amine wie Triethylamin, Triethanolamin oder, besonders bevorzugt, N-Dimethylethanolamin. Im allgemeinen werden die vorliegenden Carboxylgruppen zumindest 80 % neutralisiert, wobei gegebenenfalls auch ein Überschuß an Neutralisationsmittel zum Einsatz gelangen kann. Die Komponente b) weist im allgemeinen einen Gehalt an Carboxylatgruppen von 60 bis 130 Milliäquivalenten pro 100 g Feststoff auf.

Nach erfolgter Neutralisation wird Wasser, vorzugsweise in einer solchen Menge hinzugegeben, daß 20- bis 50-gew.-%ige wäßrige Lösungen oder Dispersionen der ponente b) resultieren. Falls zur Herstellung der isocyanatkomponente b) ein Lösungsmittel der beispielhaft genannten Art eingesetzt worden ist, so kann dieses aus der wäßrigen Phase beispielsweise durch Vakuumdestillation entfernt werden. Wie bereits angedeutet können spezielle Lösungsmittel wie beispielsweise N-Methylpyrrolidon auch in geringen Mengen (weniger als 10 Gew.-%) in dem Beschichtungsmittel verbleiben. Sie wirken einerseits als Verlaufsmittel und andererseits als Stabilisierungshilfsmittel.

Grundsätzlich möglich wäre jedoch auch eine Vorgehensweise zur Herstellung der wäßrigen Lösungen bzw. Dispersionen, die darin besteht, freie Carboxylgruppen und blockierte Isocyanatgruppen aufweisende Polyisocyanate b), gegebenenfalls in Form einer organischen Lösung in einem der beispielhaft genannten Lösungsmittel, mit einer wäßrigen Lösung eines Neutralisationsmittels der genannten Art zu vermischen, so daß Neutralisation und Löse- bzw. Dispergiervorgang einstufig erfolgen.

Zur Herstellung der erfindungsgemäßen Überzugsmittel werden vorzugsweise die beschriebenen wäßrigen Lösungen oder Dispersionen der Polyhydroxylkomponente a) mit der wäßrigen Lösung oder Dispersion des blockierten Polyisocyanats b) miteinander vermischt, wobei die Mengenverhältnisse vorzugsweise so gewählt werden, daß das Äquivalentverhältnis von blockierten Isocyanatgruppen der Komponente b) zu alkoholischen Hydroxylgruppen der Komponente a) bei 0,6:1 bis 1,5:1, bevorzugt bei etwa 0,7:1 bis 1:1 liegt. Grundsätzlich möglich, jedoch weniger bevorzugt, wäre auch eine Arbeitsweise dergestalt, daß man die wäßrige Lösung oder Dispersion der Polyhydroxylkomponente a) mit dem Neutralisationsmittel vermischt und das unneutralisierte blockierte Polyisocyanat b), gegebenenfalls in Form einer organischen Lösung, mit diesem Gemisch vermischt.

Übliche Zusatzmittel wie Pigmente, Verlaufsmittel, blasenverhindernde Mittel, Katalysatoren, aber auch. weitere Bindemittel wie Melamin- oder Harnstoff-Formaldehydharze können dem wäßrigen Bindemittelgemisch oder auch den Einzelkomponenten a) oder b) vor deren Vereinigung zugegeben werden.

Die auf diese Weise hergestellten erfindungsgemäßen Einbrennfüller können nach an sich bekannten Methoden, beispielsweise durch Spritzen, Streichen, Tauchen, Fluten oder mit Hilfe von Walzen und Rakeln auf beliebige hitzeresistente Substrate ein- oder mehrschichtig aufgetragen werden.

Man erhält beispielsweise Überzüge auf Metall, Kunststoff, Holz oder Glas durch Aushärten des Lackfilmes bei 80 bis 220°C, vorzugsweise bei 130 bis 180°C.

Die erfindungsgemäßen Einbrennfüller sich vorzugsweise zur Herstellung von Überzügen und Lackierungen auf Stahlblechen wie sie beispielsweise zur Herstellung von Fahrzeugkarosserien, Maschinen, Verkleidungen, Fässern oder Containern Verwendung finden. Sie werden bevorzugt verwendet für die Herstellung von Automobilfüllern. Die Lackfilme haben im allgemeinen eine Trockenschichtdicke von 0,01 bis 0,3 mm.

Die erfindungsgemäßen Einbrennfüller ergeben einen langanhaltenden Oberflächenschutz, wie in den Beispielen demonstriert wird. Besonders die hohe Schlagfestigkeit ist hervorzuheben, was die Bindemittel für Anwendungen bei denen ein guter Steinschlagschutz erforderlich ist, in hervorragender Weise geeignet macht.

Der besondere Vorteil der neuen wäßrigen Einbrennfülle ist ihre hohe Stabilität bei Lagerung sowohl bei Raumtemperatur als auch bei leicht erhöhter Temperatur von 33 bis 60°C.

Ein weiterer Vorteil der neuen wäßrigen Bindemittel ist ihre gute Aufarbeitbarkeit bzw. Recyclefähigkeit durch Ultrafiltration.

In den nachfolgenden Beispielen beziehen sich alle Prozentangaben, falls nichts anders lautendes vermerkt, auf das Gewicht.

### Beispiele

### Beispiel 1

### (Herstellung bzw. Beschreibung der Ausgangsstoffe)

### 1.1. 4,4'-Diisocyanatodicyclohexylmethan (®Desmodur W der Bayer AG) NCO-Funktionalität: 2,0

### 1,2. Oligomerisierungsprodukt von 1,6-Diisocyanatohexan mit der NCO-Funktionalität von 2,3,

2000 g 1,6-Diisocyanatohexan werden in einem geeigneten Reaktionsgefäß vorgelegt und auf 50°C erhitzt. Unter ständigem Rühren unter Stickstoffatmosphäre werden anschließend 20 g 2,2,4-Trimethylpentandiol-1,3 und dann 30 g Tri-n-butylphosphin eingetragen. Die exotherme Reaktion wird durch Kühlung auf 60°C gehalten. Nach einer Reaktionszeit von 6 h weist das Reaktionsgemisch einen NCO-Gehalt von 42,5 % auf. Die Reaktion wird jetzt durch Zugabe von 16,5 g Toluolsulfonsäuremethylester und 2-stündiges Nacherhitzen bei 80°C abgestoppt. Die so erhaltene Rohware wird dann mittels Fallrohrverdampfer (165°C/1 mbar) und Dünnschichtverdampfer (150°C/0,30 mbar) von überschüssigem Ausgangsdiisocyanat befreit.

Das resultierende Produkt weist folgende Daten auf:

| | |
|---|---|
| NCO-Gehalt (%) | 21,6 |
| Viskosität (mPa.s/23°C) | 200 |
| Hazen-Farbzahl | 50 |
| freies Ausgangsdiisocyanat (%) | 0,2 |
| NCO-Funktionalität | ca. 2,3 |

Eine gelchromatographische Untersuchung zeigt, daß das so erhaltene Oligomerisierungsprodukt zu 72 % aus einem Uretdiongruppen enthaltenen Diisocyanat der Formel (I) und zum Rest aus Tris-(6-isocyanatohexyl)-isocyanurat, dessen höheren Homologen, urethanisierten Produkten und höhermolekularen Homologen des Uretdiondiisocyanats besteht.

### 1,3. Oligomerisierungsprodukt von 1,6-Diisocyanatohexan mit einer NCO-Funktionalität von 3,9

Gedünnschichtetes, Isocyanuratgruppen aufweisendes Polyisocyanat auf Basis von 1,6-Diisocyanatohexan hergestellt entsprechend Beispiel 1 der EP-A-00 10 589 mit einem NCO-Gehalt von 21,5 %, einer Viskosität (25°C) von 2100 mPa.s, einem Gehalt an monomeren 1,6-Diisocyanatohexan von 0,1 % und einem Gehalt an Triisocyanatohexylmonoisocyanurat von ca. 49 %. Der Rest sind höhermolekulare Homologe mit 2 und mehr Isocyanuratgruppen pro Molekül, Die mittlere NCO-Funktionalität beträgt ca. 3,9.

### Beispiel 2

### (Herstellung einer in Wasser gelösten Polyisocyanatkomponente b))

| Bestandteile: | |
|---|---|
| 97,5 g | Polyisocyanat aus Beispiel 1.3 |
| 65,5 g | Polyisocyanat aus Beispiel 1.1 |
| 56,6 g | Butanonoxim |
| 27,5 g | Hydroxypivalinsäure |
| 29,7 g | Dimethylaminoethanol (DMAE) |
| 15,4 g | N-Methylpyrrolidon (NMP) |
| 325,0 g | Wasser |

### Durchführung der Reaktion:

Zu dem Gemisch der beiden Polyisocyanate (mittlere NCO-Funktionalität: ca. 2,6) wird bei wenig unter 80°C liegenden Temperaturen eine erste Teilmenge von 34,8 g Butanonoxim unter Kühlung so zudosiert, daß eine Temperatur von 80°C nicht überschritten wird. Nach Abkühlen auf 50 bis 60°C werden NMP und Hydroxypivalinsäure zugegeben. Dann wird langsam auf 90 bis 100°C aufgeheizt. Zu Beginn ist die Reaktion leicht exotherm. Die Reaktion ist beendet, wenn nach 5 bis 8 Stunden bei dieser Temperatur ein NCO-Gehalt von 4,3 bis 4,6 % durch Titration mit Dibutylamin gemessen wird. Nach langsamer Zugabe der restlichen Butanonoximmenge von 21,8 g wird noch kurze Zeit bei 90°C nachgerührt (NCO im IR-Spektrum = 0) und dann mit der DMAE neutralisiert. Nach weiteren 10 Minuten wird bei 80 bis 90°C mit 325 g 60 bis 70°C warmem Wasser dispergiert. Man erhält eine klare Lösung mit einem Feststoffgehalt von 40 % und einer Viskosität von 25 000 mPa.s bei 23°C. Der Gehalt an blockiertem Isocyanat beträgt 4,4 % in Lösung. Die Funktionalität bezogen auf blockiertes NCO beträgt 2,03.

### Beispiel 3

### (Herstellung einer in Wasser gelösten Polyisocyanatkomponente)

| Bestandteile: | |
|---|---|
| 146,3 g | Polyisocyanat aus Beispiel 1.3 |
| 48,8 g | Polyisocyanat aus Beispiel 1.2 |
| 56,6 g | Butanonoxim |
| 27,5 g | Hydroxypivalinsäure |
| 31,2 g | Dimethylaminoethanol (DMAE) |
| 17,5 g | NMP |
| 370,0 g | Wasser |

### Durchführung der Reaktion:

Zu dem Gemisch der beiden Polyisocyanate (mittlere NCO-Funktionalität: ca. 3,3) wird bei wenig unter 80°C liegenden Temperaturen eine erste Teilmenge von 34,8 g Butanonoxim unter Kühlung so zudosiert, daß eine Temperatur von 80°C nicht überschritten wird. Nach Abkühlen auf 50 bis 60°C werden NMP und Hydroxypivalinsäure zugegeben. Dann wird langsam auf 90 bis 100°C aufgeheizt. Zu Beginn ist die Reaktion leicht exotherm. Die Reaktion ist beendet, wenn nach 3 bis 5 Stunden bei dieser Temperatur ein NCO-Gehalt von 3,5 bis 3,8 % durch Titration mit Dibutylamin gemessen wird. Nach langsamer Zugabe der restlichen Butanonoximmenge von 21,8 g wird noch kurze Zeit bei 90°C nachgerührt (NCO im IR-Spektrum = 0) und dann mit der DMAE neutralisiert. Nach weiteren 10 Minuten wird bei 80 bis 90°C mit 370 g 60 bis 70°C warmem Wasser dispergiert. Man erhält eine klare Lösung mit einem Feststoffgehalt von 40 % und einer Viskosität von 30 000 mPa.s bei 23°C. Der Gehalt an blockiertem Isocyanat beträgt 3,9 % in Lösung. Die Funktionalität des Produktes bezogen auf blockiertes NCO beträgt 2,55.

### Beispiel 4

### (wäßriges, Hydroxylgruppen enthaltendes, urethanisiertes Polyesterharz)

In einem 10 l-Reaktionskessel mit Rühr-, Kühl-, Heizvorrichtung und Wasserabscheider werden 509 g Erdnußfettsäure, 1051 g Hexandiol-1,6, 560 g Cyclohexandimethanol-1,4, 1093 g Adipinsäure, 1243 g Isophthalsäure und 940 g Trimethylolpropan eingewogen und bei 220°C verestert, bis die Säurezahl ≤5 ist.

3540 g dieses Polyesters und 330 g Dimethylolpropionsäure werden in 700 g N-Methylpyrrolidon gelöst, mit 10 g Dibutylzinnoxid versetzt und bei 70°C mit 1000 g Isophorondiisocyanat umgesetzt. Die Reaktion wird bei 70 bis 110°C so lange durchgeführt, bis keine NCO-Gruppen mehr nachweisbar sind. Nach Zugabe von 135 g Methyldiethanolamin wird das Harz in 5100 g Wasser dispergiert. Man erhält eine etwa 45 %ige Harzlösung. Der Gehalt an organischem Lösemittel beträgt 6,5 %. Der Gehalt an reaktiven Hydroxylgruppen, die an das Polyesterharz gebunden sind, beträgt 1,17 %.

### Beispiel 5

### (wäßriges, Hydroxylgruppen enthaltendes, urethanisiertes Polyesterharz)

In einem 15 l-Reaktionskessel mit Rühr-, Kühl-, Heizvorrichtung und Wasserabscheider werden 361 g Benzoesäure, 2316 g Trimethylolpropan, 2853 g Hexandiol-1,6, 1602 g Cyclohexandimethanol-1,4, 3130 g Adipinsäure, 2931 g Isophthalsäure und 300 g Dimerfettsäure (®Pripol 1008, Unichema) eingewogen und bei 210°C verestert, bis die Säurezahl ≤3 ist.

1020 g dieses Polyesters werden zusammen mit 87 g Dimethylolpropionsäure bei 60°C in 2000 g Aceton gelöst. Nach Zugabe von 1,5 g Dibutylzinndilaurat als Katalysator werden 230 g Isophorondiisocyanat und 65 g 4,4'-Diisocyanato-dicyclohexylmethan zugegeben und der Ansatz bei 60°C so lange gerührt, bis keine freie NCO-Gruppe mehr nachweisbar ist. Nach Zugabe von 35 g Dimethylethanolamin und 1600 g Wasser wird das Aceton destillativ entfernt. Man erhält so eine etwa 45 %ige Harzlösung, die keine organischen Lösemittel enthält. Die Lösung hat einen Gehalt an isocyanatreaktiven Hydroxylgruppen von 1 %.

### Beispiel 6

### (Formulierung eines Füllerharzes aus wäßrigem, blockiertem Isocyanat und wäßriger Hydroxylkomponente)

22,0 Teile wäßriges Harz aus Beispiel 4 und 21,6 Teile wäOriges Harz aus Beispiel 5 werden mit 19,3 Teilen wäßrigem Polyisocyanat aus Beispiel 3 gründlich vermischt. Das NCO (blockiert): OH-Äquivalentverhältnis beträgt 0,7. Auf einer Perlmühle dispergiert man in 30 min bei 2800 U/min in die Mischung 15 Teile Titandioxid (vom Rutiltyp), 0,2 Teile Eisenoxidschwarz, 4,8 Teile Schwerspat, 2,1 Teile Talkum. Außerdem gibt man 0,45 Teile ®ADDITOL XW 395 (oberflächenaktives Hilfsmittel der Fa. Vianova Hoechst, Wien), 0,45 Teile ®SURFINOL 104 E (oberflächenaktives Zusatzmittel der Fa. AER PROCUCTS), 0,4 Teile ®AEROSIL R 972 (Degussa AG) und 13,5 Teile entionisiertes Wasser zu. Mit 0,2 Teilen N-Dimethylethanolamin wird ein pH-Wert von 8 eingestellt.

### Beispiel 7

### (Formulierung eines Füllerharzes aus wäßrigem blockiertem Isocyanat und wäßriger Polyhydroxylkomponente)

Man verfährt wie in Beispiel 6 und vermischt bei einem (blockierten) NCO:OH-Äquivalentverhältnis von 0,7 folgende Bestandteile über eine Perlmühle:

| | |
|---|---|
| 22,7 Teile | wäßriges Hydroxylharz aus Beispiel 4 |
| 22,2 Teile | wäßriges Hydroxylharz aus Beispiel 5 |
| 17,5 Teile | wäßriges Polyisocyanat aus Beispiel 2 |
| 15,0 Teile | TiO₂ |
| 0,1 Teile | Eisenschwarzoxid |
| 4,8 Teile | BaSO₄ |
| 2,1 Teile | Talkum |
| 13,1 Teile | entionisiertes H₂O |
| 0,5 Teile | ADDITOL XW 395 |
| 0,5 Teile | SURFINOL 104 E |
| 0,4 Teile | AEROSIL 972 |
| 0,2 Teile | N-Dimethylethanolamin |
| | |

Die Paste hat einen pH-Wert von 8.

### Beispiel 8

### (Vergleichsversuch: Formulierung eines Füllers nach dem Stand der Technik)

Folgende Bestandteile werden vermischt und ebenfalls über eine Perlmühle dispergiert:

| | |
|---|---|
| 26,1 Teile | wäßriges Hydroxylharz aus Beispiel 4 |
| 25,5 Teile | wäßriges Hydroxylharz aus Beispiel 5 |
| 4,4 Teile | eines wasserlöslichen Hexamethoxymethylmelaminharzes |
| 15,1 Teile | Titandioxid |
| 0,1 Teile | Eisenoxidschwarz |
| 4,8 Teile | Bariumsulfat |
| 2,1 Teile | Talkum |
| 20,2 Teile | entionisiertes Wasser |
| 0,5 Teile | ADDITOL XW 395 |
| 0,5 Teile | SURFINOL 104 E |
| 0,4 Teile | AEROSIL 972 |
| 0,2 Teile | N-Dimethylethanolamin (→ pH 8) |

### Beispiel 9

### (Anwendung der in den Beispielen 6, 7 und 8 erhaltenen Harze als Füller-Einbrennsystem)

Die wäßrigen Harze aus den Beispielen 6 bis 8 wurden mit deionisiertem Wasser auf eine Viskosität von ca. 30 s Auslaufzeit (DIN-Becher, 4 mm/23°C) eingestellt und mit einer Fließbecherpistole mit 5 bar Luftdruck bei 65 % rel. Feuchte/23°C auf mit einer kathodisch abgeschiedenen Elektrotauchgrundierung (ca. 20 µm) beschichtete zinkphosphatierte Stahlbleche spritzappliziert.

Die Härtung des Füllers erfolgte nach 10 min Ablüftung bei 23°C im Umluftofen, 10 min bei 75°C und anschließend 20 min bei 165°C. Die Trockenfilmstärke betrug ca. 35 µm.

Auf die Füllerschicht wurde a) ein handelsüblicher Automobildecklack auf Basis Alkyd/Melaminharz mit einer Trockenfilmstärke von ca. 35 µm aufgebracht und 30 min bei 130°C getrocknet sowie b) ein wäßriger, metallic Basislack mit einer Trockenfilmdicke von ca. 20 µm appliziert, nach 10 min bei 80°C mit einem 2-Komponenten-PUR-Klarlack (35 µm Trockenfilm) überschichtet und zusammen ebenfalls 30 min bei 130°C eingebrannt.

Die Prüfergebnisse sind in der nachfolgenden Tabelle 1 zusammengefaßt. Die Beständigkeitseigenschaften der Filme (Lösungsmittel-, Wasser- und Salzsprühfestigkeit) entsprechen den Praxisanforderungen).

### Beurteilungsmethoden:

### Decklackstand

Glanz und Oberfläche des Decklackes auf den verschiedenen Füllern wurden subjektiv nach optischen Vergleichswerten in Prozent (100 = sehr gut; 0 = sehr schlecht) bewertet.

### Steinschlagfestigkeit

### Als Prüfgeräte wurden verwendet

a) Steinschlagprüfgerät nach VDA (Fa. Erichsen, Modell 508) mit jeweils 2 mal 500 g Stahlschrot (kantig, 4 bis 5 mm) beschossen mit einem Luftdruck von 1,5 bar bei 23°C.
   Abmusterungen wurden durchgeführt bezogen auf Decklackhaftung (1 bis 3, 1 = sehr gute Decklackhaftung, 3 = Abplatzungen zwischen Decklack und Füller) und Durchschläge bis auf das Blech (0 bis 10, 0 = kein Durchlag, 10 = sehr viele Durchschläge)
b) Steinschlag-Prüfgerät nach Mercedes-Benz Typ 490 bei 23°C und -20°C Bewertungen wurden durchgeführt hinsichtlich Decklackhaftung (1 bis 3) und Durchschläge bis auf das Blech in mm²

**Tabelle 1**

| Beispiel | | 6 | 7 | 8 |
|---|---|---|---|---|
| a) Decklack (Alkyd/Helamin) | | | | |
| b) Decklack (2-Schicht-PUR) | | | | |
| | | | | |
| Decklackstand | a) | 80 % | 80 % | 80 % |
| | b) | 90 % | 90 % | 90 % |
| | | | | |
| Steinschlag VDA | | | | |
| Durchschläge | a) | 0 | 0 | 1 |
| | b) | 0 | 0 | 0 |
| | | | | |
| Decklackhaftung | a) | 1 | 1 | 2 |
| | b) | 1 | 1 | 2 |
| | | | | |
| Steinschlag MB, 490 | | | | |
| Durchschläge 23°C/-20°C | a) | 0/0 | 0/0 | 0/1 |
| | b) | 0/0 | 0/0 | 0/1 |
| | | | | |
| Decklackhaftung 23°C/-20° C | a) | 1/1 | 1/1 | 2/2 |
| | b) | 1/1 | 1/1 | 2/2 |
| | | | | |
| Füller auf Stahlblech | | | | |
| Erichsentiefung (DIN 53 156) | | 10 | 10 | 10 |
| Gitterschnitt (DIN 53 151) | | Gt O | Gt O | Gt O |
| | | | | |
| Füller auf Glasplatte | | | | |
| Pendelhärte (DIN 53 157) | | 115 s | 133 s | 80 s |

### Zusammenfassung der Ergebnisse

Die Tabelle 1 zeigt, daß die Versuche 6 und 7 dem Vergleichsversuch 8 in den meisten geprüften Eigenschaften ebenbürtig sind, in den entscheidenden Eigenschaften dem Steinschlagschutz und der Oberflächenhärte aber deutlich überlegen sind. Auch die Haftung zum Decklack ist bei den erfindungsgemäfßen Versuchen besser als bei dem Vergleichsversuch.

## Patentansprüche

1. Hitze-vernetzbare, wäßrige Einbrennfüller, die als Bindemittel eine Kombination aus
a) einer in Wasser löslichen oder dispergierbaren Polyolkomponente mit
b) einer in Wasser löslichen oder dispergierbaren Polyisocyanatkomponente mit blockierten Isocyanatgruppen, sowie gegebenenfalls die üblichen Hilfe-und Zusatzmittel der Beschichtungstechnologie enthalten,
dadurch gekennzeichnet, daß die Polyisocyanatkomponente b) eine mittlere NCO-Funktionalität, bezogen auf die reversibel blockierten Isocyanatgruppen von 2,0 bis 2,6 aufweist und das zumindest teilweise durch Neutralisation der eingebauten Carboxylgruppen in die Salzform überführte Umsetzungsprodukt aus
b1) einem Polyisocyanatgemisch einer mittleren NCO-Funktionalität von 2,5 bis 3,5 aus (i) mindestens 15 Gew.-X einer Diisocyanat-Komponente bestehend aus mindestens einem organischen Diisocyanat und (ii) einer der mittleren NCO-Funktionalität entsprechenden Menge einer höherfunktionellen Polyisocyanat-Komponente, bestehend aus mindestens einem tri- oder höherfunktionellen Polyisocyanat mit
b2) einem Blockierungsmittel für Isocyanatgruppen in einer Menge von 50 bis 80 Äquivalent-%, bezogen auf die freien Isocyanatgruppen der Komponente b1), und mit
b3) mindestens einer aliphatischen Monohydroxymonocarbonsäure in einer Menge von 20 bis 50 Äquivalent-%, bezogen auf die freien Isocyanatgruppen der Komponente b1) und die Hydroxylgruppen der Komponente b3)
darstellt, mit der Maßgabe, daß das Äquivalentverhältnis, bezogen auf die Blockierungsmittel b2) und die Hydroxylgruppen der Komponente b3) einerseits zu Isocyanatgruppen der Komponente b1) andererseits bei mindestens 0,9:1 liegt.

2. Einbrennfüller gemäß Anspruch 1, dadurch gekennzeichnet, daß die Komponenten a) und b) in solchen Mengenverhältnissen vorliegen, die einem Äquivalentverhältnis von blockierten Isocyanatgruppen zu Hydroxylgruppen von 0,6:1 bis 1,5:1 entsprechen.

3. Verwendung der Einbrennfüller gemäß Anspruch 1 und 2 zur Einbrennlackierung von metallischen Substraten.

## Claims

1. Heat-curable, aqueous stoving fillers, comprising as a binder combination
a) a water-soluble or water-dispersible polyol component with
b) a water-soluble or water-dispersible polyisocyanate component containing blocked isocyanate groups, and optionally the auxiliary substances and additives conventionally used in coating technology,
characterised in that the polyisocyanate component b) has an average NCO functionality, based on the reversibly blocked isocyanate groups, of 2.0 to 2.6 and is the reaction product - converted at least partly into the salt form by neutralisation of the incorporated carboxyl groups - of
b1) a polyisocyanate mixture having an average NCO functionality of 2.5 to 3.5 and comprising (i) at least 15 wt.% of a diisocyanate component consisting of at least one organic diisocyanate and (ii) a quantity, corresponding to the average NCO functionality, of a higher-functional polyisocyanate component consisting of at least one trifunctional or higher-functional polyisocyanate with
b2) a blocking agent for isocyanate groups in a quantity of from 50 to 80 equivalent-%, based on the free isocyanate groups of component b1), and with
b3) at least one aliphatic monohydroxymonocarboxylic acid in a quantity of from 20 to 50 equivalent-%, based on the free isocyanate groups of component bl) and on the hydroxyl groups of component b3),
with the proviso that the equivalent ratio, based on the blocking agents b2) and the hydroxyl groups of component b3) in relation to the isocyanate groups of component b1), is at least 0.9:1.

2. Stoving fillers according to claim 1, characterised in that components a) and b) are present in quantities corresponding to an equivalent ratio of blocked isocyanate groups to hydroxyl groups of 0.6:1 to 1.5:1.

3. Use of the stoving fillers according to claim 1 and claim 2 for the stove-enamelling of metallic substrates.

## Revendications

1. Enduits aqueux réticulables à la chaleur, qui contiennent comme liants une combinaison de
a) un composant polyol soluble ou dispersable dans l'eau avec
b) un composant polyisocyanate soluble ou dispersable dans l'eau avec des groupes isocyanates bloqués, ainsi que le cas échéant les additifs et adjuvants usuels de la technologie des revêtements,
caractérisés en ce que le composant polyisocyanate b) a une fonctionnalité moyenne NCO, par rapport aux groupes isocyanates bloqués de manière réversible de 2,0 à 2,6 et représente le produit de réaction transformé en forme sel au moins partiellement par neutralisation des groupes carboxyles incorporés obtenu à partir de
b1) un mélange de polyisocyanates d'une fonctionnalité NCO moyenne de 2,5 à 3,5 à partir de (i) d'au moins 15 % en poids d'un composant diisocyanate constitué d'au moins un diisocyanate organique et (ii) d'une quantité correspondante en fonctionnalité NCO moyenne d'un composant polyisocyanate de fonctionnalité supérieure, constitué d'au moins un polyisocyanate trifonctionnel ou à fonctionnalité supérieure avec
b2) un agent de blocage des groupes isocyanates en une quantité de 50 à 80 % en équivalent, par rapport aux groupes isocyanates libres du composant bl), et avec
b3) au moins un acide monohydroxycarboxylique aliphatique en une quantité de 20 à 50 % en équivalent, par rapport aux groupes isocyanates libres du composant b1) et aux groupes hydroxyles du composant b3),
à la condition que le rapport d'équivalent, par rapport à l'agent de blocage b2) et aux groupes hydroxyles du composant b3) d'une part, par rapport aux groupes isocyanates du composants bl) d'autre part représente au moins 0,9:1.

2. Enduits à cuire selon la revendication 1, caractérisés en ce que les composants a) et b) se trouvent dans des rapports quantitatifs, qui correspondent à un rapport d'équivalent des groupes isocyanates bloqués aux groupes hydroxyles de 0,6:1 à 1,5:1.

3. Utilisation des enduits à cuire selon la revendication 1 et 2 à des laquages à cuire de substrats métalliques.
